# EUROPÄISCHE PATENTSCHRIFT

(11) **EP 1 321 743 B1**
(45) Veröffentlichungstag und Bekanntmachung des Hinweises auf die Patenterteilung: **05.08.2015**
(21) Anmeldenummer: 02026560.9
(22) Anmeldetag: 28.11.2002
(51) Int. Cl.: G01D 5/14

(54) **Absolutlängenmesssystem, bei dem ein Massstab relativ zur Position von beabstandeten Längesensoren bewegt wird**
Absolute length measuring system with a measuring rod moving with respect to mutually spaced length sensors
Système pour mesurer une longueur absolue comprenant une barre de mesure qui se déplace relativement par rapport à des sondes de longueur mutuellement espacées

(30) Priorität: 20.12.2001 DE 10162849
(43) Veröffentlichungstag der Anmeldung: 25.06.2003
(73) Patentinhaber: Sensitec GmbH, 35578 Wetzlar (DE)
(72) Erfinder: Loreit, Uwe, 35580 Wetzlar (DE); Dettmann, Fritz, Dr., 35586 Wetzlar (DE); Fritz, Wolfgang, 35440 Linden (DE)
(74) Vertreter: Schubert, Siegmar

(56) Entgegenhaltungen:
- DD-A1- 221 005
- DE-A- 3 244 891
- DE-A- 3 818 044
- DE-A- 3 829 279
- DE-A- 19 910 636
- US-A- 3 906 469
- US-A- 4 698 996

## Beschreibung

Die Erfindung betrifft ein Absolutlängenmesssystem, bei dem ein Maßstab relativ zur Position mindestens eines Längensensors bewegt wird, nach dem Oberbegriff des Anspruchs 1.

Dementsprechend betrifft die Erfindung implizit auch ein Messsystem zur Bestimmung der Position eines beweglichen Teiles einer Anordnung, das entweder mit dem Maßstab oder mit den Längensensoren starr verbunden ist. Die Position des Teiles gegenüber der hier als fest betrachteten restlichen Anordnung wird dabei in jedem Bewegungszustand angezeigt. Längen können als Differenzen von Positionen angegeben werden. Das hier vorgeschlagene Messsystem ist vorzugsweise zur Bestimmung großer Längen einsetzbar.

Längenmesssysteme, die aus einem Maßstab und aus einem Längensensor bestehen, sind seit langem bekannt. üblicherweise stimmt bei diesen Messsystemen die maximale messbare Länge mit der Länge des Maßstabes überein. Bei großen Messlängen sind also große Maßstabslängen erforderlich. Die Herstellung eines Maßstabes großer Länge ist jedoch mit erheblichen Schwierigkeiten verbunden. Damit für die Herstellung nicht eine Vorrichtung benutzt werden muss, die mindestens solang wie die beabsichtigte Messlänge des Längenmesssystems ist, muss der Messstab aus flexiblem Material bestehen, das zusammenlegbar oder aufrollbar ist. die Herstellung des Maßstabes ist bei solchem Material stets mit größeren Längenfehlern verbunden. Weitere Fehler werden dann noch bei der Montage im eigentlichen Messsystem erzeugt. Das ist insbesondere der Fall, wenn ein Messsystem entsprechend der Offenlegungsschrift DE 199 10 636 A verwendet wird, von der der Oberbegriff des Anspruchs 1 ausgeht. Hier besteht der Maßstab aus einem magnetischen Material mit vorzugsweise rundem Querschnitt, das quer zur Längsrichtung magnetisiert ist, wobei die Magnetisierungsrichtung mit fortschreitendem Messweg zunehmend gegen die Richtung am Maßstabsanfang verdreht ist. Hier muss das Maßstabsmaterial einerseits für große Messlängen

flexibel sein, andererseits muss aber bei der Montage eine Verdrehung des Maßstabes ausgeschlossen werden, da mit der Richtung der am jeweiligen Ort vorhandenen Magnetisierung die Information über die Position gegeben ist. Größere Maßstabsfehler sind hier also nur mit hohem Aufwand vermeidbar.

Entsprechend DE 32 44 891 A ist es im Falle eines magnetischen Messsystems auch möglich, große Messlängen dadurch zu erreichen, dass eine Vielzahl von magnetischen Sensoren entlang des Messweges installiert ist und an dem beweglichen Teil der Anordnung ein Magnet befestigt ist, dessen Position aus den Anzeigen der magnetischen Sensoren ermittelt wird. Nachteilig ist hier, dass bei großen Messlängen sehr viele magnetischen Sensoren benutzt werden müssen. Damit sind hohe Kosten verbunden. Alle Sensoren müssen mit elektrischer Energie versorgt werden. Die Positionen der Sensoren müssen mindestens mit der Präzision bei der Montage einjustiert werden, die später vom Messsystem verlangt wird. Die Verwendung von Magneten großer Abmessungen zur Begrenzung der Anzahl der magnetischen Sensoren führt nur in begrenztem Umfang zu Einsparungen, da größere Magneten schwächere Magnetfelder erzeugen. Ihr Einsatz würde also die Anforderungen an die Empfindlichkeit der Sensoren steigern. Gleichzeitig nimmt der Einfluss der überall vorhandenen magnetischen Störfelder zu.

Bei einem bekannten magnetisch-elektrischen Positionsgeber gemäß US-A-3 906 469 ist eine Magnetfeldanordnung, die zwei zusammengesetzte Magnet umfasst, neben einer Reihe von magnetisch betätigbaren Schaltern angeordnet, wobei die Magnetfeldanordnung und die Reihe der Schalter in Längsrichtung zueinander verschoben werden können. Statt der magnetisch betätigbaren Schalter können andere magnetflussempfindliche Mittel, insbesondere Hall-Effekt-Sensoren verwendet werden. In jedem Fall kommt es darauf an, elektrische Anzeigen aus Ausgangssignalen der magnetflussempfindlichen Mittel zu bilden, die unabhängig von begrenzten lateralen Abstandsänderungen zwischen der Magnetfeldanordnung und den magnetflussempfindlichen Mitteln sind. Hierzu sind die Magnetfeldanordnungen so ausgebildet, dass sie zwischen ihren Enden axiale Magnetflussdichten erzeugen, die einen Schalteransprechwert überschreiten, und ausserhalb der Enden auf Beträge unterhalb des Schalteransprechwerts scharf abfallen, wobei nur in einer Ausführungsform der Magnetfeldanordnung auch ein scharfer axialer Magnetflussdichteabfall mit Richtungs- bzw. Polaritätsänderung im Mittelbereich der Magnetflussanordnung auftritt. In jedem Fall werden mindestens zwei der magnetischen betätigbaren Schalter, die in der Reihe angeordnet sind, durch das Magnetfeld positionsabhängig geschlossen, um ein verwendetes, an sich übliches magnetflussempfindliches inkrementales Potentiometer einzustellen.

Bei einem anderen bekannten Positionsmesssystem sind ein magnetischer Stellungsgeber, insbesondere ein Stabmagnet und eine Reihe im Abstand zueinander angeordnete magnetische Sensoren, die Signalspannungen variabler Werte unterschiedlicher Polarität abgeben können, relativ zueinander positionierbar (US-A-698 996). In einem bevorzugten Ausführungsbeispiel sind einzelne der Sensoren über einen elektronischen Multiplexer mit einer Abfrage- und Auswerteschaltung verbunden, welche die Position des magnetischen Stellungsgebers feststellt, indem der Position mindestens ein charakteristischer Signalwert zugeordnet wird. Hierzu werden im einzelnen zunächst bei einer Eichung die Spannungen, die von jeweils zwei zueinander benachbarten Sensoren in bestimmten Positionen abgegeben werden und demgemäß bestimmte Werte bzw. Werteverhältnisse annehmen, diesen Positionen zugeordnet gespeichert. Bei einem anschliessenden Messvorgang können diese bevorzugten Positionen nach Maßgabe der Signalspannungen zweier Sensoren, die dem magnetischen Positionsgeber benachbart sind bzw. diesen gegenüberstehen, abgegeben werden. Darüber hinaus können auch weitere nicht gespeicherte aktuelle Positionen durch Interpolation der bei der Eichung gespeicherten Werte bzw. Positionen zweier benachbarter Sensoren aufgrund der aktuellen Signalspannungen zumindest näherungsweise angegeben werden. Abgesehen von dem Rechenaufwand bei der Interpolation, ist deren Genauigkeit begrenzt.

Bei der aus der DD 221 005 A bekannten Anordnung zum Messen großer Längen und Verschiebungen ist ein kurzer Maßstab parallel zu mehreren ortsfesten Abtastköpfen verschiebbar, deren Abstand höchstens gleich der Länge des Maßstabs ist. Die Abtastköpfe sind mit einem Zähler und/oder einem die Abtastköpfe ansteuernden Rechner verbunden, welcher auch die Funktion einer Auswerteschaltung ausübt. Diese bekannte Anordnung stellt kein Absolutlängenmesssystem dar: Der kurze Maßstab ist mit einer Teilung versehen, die immer nur Zählimpulse eines der beiden Abtastköpfe erzeugt, die auf den Zähler bzw. Rechner gelangen, um dort als Inkremente gezählt zu werden.

Die Aufgabe der vorliegenden Erfindung besteht darin, ein Längenmesssystem vorzugsweise für größere Messlängen anzugeben, dass bei hoher Messgenauigkeit mit einem minimalen Aufwand realisiert werden kann.

Diese Aufgabe wird durch ein Absolutlängenmesssystem mit den Merkmalen des Anspruch 1 gelöst. Danach geht das Absolutlängenmesssystem von mindestens einem magnetischen Längensensor aus, relativ zu dem ein Maßstab bewegt wird, der über seine Länge einen eindeutigen, den Ort charakterisierenden Magnetisierungszustand aufweist.

Damit kann ein genauer Messwert für die Position des Maßstabs aus einem Signal des magnetischen Längensensors gebildet werden, der durch den Magnetisierungszustand des Maßstabes am Ort des gegenüberstehenden magnetischen Längensensors erzeugt wird.

Gemäß der Erfindung wird ein Maßstab verwendet, der kürzer ist als die Messlänge, um die der Maßstab maximal verschoben werden kann. Es sind mindestens zwei magnetische Längensensoren entlang der Messrichtung vorhanden, deren Abstände zueinander kleiner als die Länge des Maßstabes sind. Mit einer Auswerteschaltung, mit der die Längensensoren verbunden sind, wird wenigstens einer der Längensensoren ausgewählt, der bei dieser Position dem Maßstab gegenübersteht, was aus dem mit diesem Längensensor erhaltenen Signalwert erkennbar ist. Die Verbindung kann beispielsweise über direkte Zuleitungen oder über einen Datenbus hergestellt sein. Die Auswahl des Längensensors gestattet bereits eine grobe Angabe der Position, allerdings nur mit einer Auflösung, die dem Abstand der Längensensoren entspricht. Der genaue Messwert für die jeweilige Position ergibt sich aus dieser groben Angabe und aus dem Signalwert des Längensensors, der durch die physikalische Eigenschaft des Maßstabes am Ort des ihm gegenüberstehenden Längensensors erzeugt wird. Diese physikalische Eigenschaft wird dem Maßstab bei seiner Herstellung in Abhängigkeit von der Länge mit hoher Genauigkeit eingeprägt. Bei der auf die magnetischen Längensensoren einwirkenden physikalischen Eigenschaft kann es sich um die Magnetisierung eines magnetischen Maßstabs senkrecht zur Maßstabsebene bzw. zur Messrichtung handeln.

Die Anzahl der benötigten Längensensoren und die Länge des Maßstabes können bei dem vorgeschlagenen Längenmesssystem so gewählt werden, dass das Messsystem bei der benötigten Längenauflösung und Messgenauigkeit mit einem minimalen Aufwand realisierbar ist. Da der Aufwand einerseits mit der Anzahl der Längensensoren ansteigt und andererseits mit der Länge des Maßstabes bei Einhaltung bestimmter Anforderungen an die Genauigkeit und bei Berücksichtigung der Kosten für Montage und Justage, wird die Ermittlung und Realisierung des optimalen Längenmesssystems für den vorgesehenen Zweck ermöglicht.

Maßstäbe für ein erfindungsgemäßes Längenmeßsystem können unterschiedlich aufgebaut sein. Im einfachen Fall enthält der Maßstab nur eine Spur, in der die physikalische Eigenschaft, die in einem gegenüberstehenden Längensensor ein Meßsignal erzeugt, eindeutig als Funktion der Maßstabslänge eingeprägt ist. Dabei ist die Position des Maßstabes gegenüber dem Längensensor immer eindeutig aus dem Meßsignal desselben bestimmbar. In einer Spur des Maßstabes kann aber auch eine periodisch mit der Länge variierende physikalische Eigenschaft eingeprägt sein. Dann ist die Position des Maßstabes gegenüber dem Längensensor nach dem inkrementalen Meßverfahren ermittelbar, bei dem die Zahl der bereits am Längensensor vorbei bewegten Periodenlängen bestimmt und außerdem zur genauen Bestimmung der Position der Wert der physikalischen Größe in dieser Position, der durch den Längensensor gemessen wird, berücksichtigt wird. Durch Anordnung mehrerer paralleler Spuren auf dem Maßstab bei Verwendung einer der Spuranzahl gleichen Anzahl von Sensorelementen innerhalb jeden Längensensors ist es jedoch auch im Falle von periodischem Verlauf der physikalischen Eigenschaft in allen Spuren möglich, die Position des Maßstabes gegenüber dem jeweiligen Längensensor immer eindeutig aus den Signalen der Sensorelemente zu bestimmen, wenn die Periodenlängen in den unterschiedlichen Spuren ungleich sind. Es ist auch möglich, daß in einer oder mehreren Spuren die physikalische Eigenschaft in Form eines Codes eingeprägt ist, so daß aus den Signalen der Sensorelemente eine Zuordnung zu einer Position eindeutig erfolgen kann.

Die Auswertung der Sensorsignale zu Ermittlung der Differenz der Position des Maßstabes gegenüber einer Anfangsposition ist besonders einfach, wenn die Abstände aller Längensensoren bekannt sind. Ein wesentlicher Vorteil des vorgeschlagenen Längenmeßsystems besteht aber gerade darin, daß die Abstände der Längensensoren im System selbst ermittelt werden können. Bei Maßstäben, die eine eindeutige Zuordnung ihrer Position gegenüber den Längensensoren zulassen, ist dazu jeweils nur eine Differenzmessung für den Fall ausreichend, daß dem Maßstab zwei Längensensoren gegenüberstehen. Bei einer einzigen periodischen Spur auf dem Maßstab ist die genaue Abstandsmessung nur dann möglich, wenn die Abstände der Längensensoren von vornherein bekannt sind. Allerdings dürfen diese von vornherein bekannten Abstände Fehler aufweisen, deren Betrag maximal mit der Periodenlänge übereinstimmen darf. Die genaue Bestimmung des jeweiligen Abstandes erfolgt dann ebenfalls mit dem Längenmeßsystem selbst. Damit entfällt ein hoher Aufwand bei der Justage der Abstände und es wird trotzdem die hohe Meßgenauigkeit des Längenmeßsystems erreicht.

Die nach der Montage des Meßsystems durchführbare Selbsteichung der Abstände der Längensensoren ermöglicht es auch, die Längensensoren in bestimmten Positionen anzubringen, die durch technische Besonderheiten entlang des Meßweges bedingt sind. So können beispielsweise bei einem Längenmeßsystem für einen Fahrstuhl in einem vielstöckigen Gebäude die Längensensoren immer genau in Fußbodenhöhe der unterschiedlichen Etagen montiert werden. Der zugehörige Maßstab hat die Länge der im Gebäude vorkommenden maximalen Etagenhöhe und ist am Fahrstuhl befestigt. So kann die Position des Fahrstuhls nach Eichung der Abstände der unterschiedlichen Etagen immer exakt angegeben werden. Differenzen in der Höhe zwischen dem Boden des Fahrstuhls und den jeweiligen Etagenfußböden können aber mit einem wesentlich geringeren Meßfehler angegeben werden, da nur die Differenz zum Signalwert, der dem Maßstabsort am Boden des Fahrstuhls entspricht, ausgewertet werden muß.

Vorteilhafterweise gestaltet sich der Aufbau von Längenmeßsystemen mit magnetischen Maßstäben und magnetischen Längensensoren besonders einfach. Dabei sind sowohl Längensensoren auf der Basis des anisotropen Effektes als auch auf der Basis des GMR-Effektes einsetzbar. Beide Sensorarten nutzen die Änderung des Widerstandes von Dünnschichtstrukturen bei Änderung der magnetischen Feldstärke oder bei Anderung der Richtung magnetischer Felder Die Dünnschichtstrukturen werden durch Anwendung der Methoden der modernen Halbleitertechnologie gefertigt. So können einzelne oder mehrere Sensorelemente auf einem Chip bei minimaler Chipfläche kostengünstig gefertigt werden. Magnetische Maßstäbe werden durch Aufmagnetisierung dauermagnetischer Bänder oder Stäbe hergestellt. Üblicherweise werden zwei entgegengesetzte Magnetisierungsrichtungen benötigt. Diese werden dem magnetischen Material mit Hilfe sogenannter Schreibanordnungen eingeprägt, die oft analog zu Schreibköpfen der Tonband- und Datentechnik aufgebaut sind. Über einem Band, daß in gleich langen Abschnitten abwechselnd senkrecht zur Bandebene nach oben und unten magnetisiert ist, besteht ein periodischer, von der Koordinate in Meßrichtung sinusförmig abhängiger Verlauf der magnetischen Feldstärke für die Komponenten parallel und senkrecht zur Bandebene. Ein solcher Maßstab ist einfach herstellbar und für die inkrementale Längenmessung in Kombination mit den genannten magnetischen Längensensoren gut geeignet. Werden parallel zur beschriebenen ersten Spur in einer oder mehreren Spuren Magnetiserungsabschnitte periodisch mit anderen Abschnittslängen oder nichtperiodisch mit unterschiedlichen Abschnittslängen in Form eines Codes magnetisiert, so kann mit Hilfe von mehreren Sensorelementen in jedem Längensensor die Position des jeweiligen Längensensors gegenüber dem Maßstab eindeutig erkannt werden. Auch diese mehrspurigen Maßstäbe sind in einfacher Weise herstellbar.

Vorteilhafte Ausführungen des erfindungsgemäßen Meßsystems lassen sich auch mit Maßstäben aufbauen, die entsprechend der DE 199 10 636 A eine senkrecht auf der Meßrichtung stehende Magnetisierung aufweisen, deren Richtung mit Fortschreiten in Meßrichtung gegenüber der Anfangsrichtung zunehmend verdreht ist. Der Längensensor besteht hier aus einem magnetoresistiven Winkelsensor, der zwei Sensorelemente enthält, die um einen bestimmten Winkel gegeneinander verdreht sind und jeweils ein von der Richtung des Magnetfeldes abhängiges Signal abgeben. Welche maximale Verdrehung der Magnetisierungsrichtung eindeutig einer bestimmten Position eindeutig zugeordnet werden kann, hängt von der Art der eingesetzten magnetoresistiven Winkelsensoren ab. Bei anisotrop magnetoresistiven Sensoren, deren Signal dem Sinus des doppelten Winkels der Richtung des Magnetfeldes gegen die Anfangsrichtung proportional ist, können maximal Verdrehungswinkel bis zu 180° eindeutig einer Position zugeordnet werden. Bei Sensoren auf der Basis des GMR-Effektes, bei denen das Signal zum Sinus des Winkels selbst proportional ist, können bis zu 360° Verdrehung der Magnetisierung eindeutig einer Position zugeordnet werden. Werden anisotrop magnetoresistive Sensoren verwendet, muß für ein Absolutlängenmeßsystem, aus dessen Meßsignalen sich stets eindeutig die Position ermitteln läßt, der Abstand der magnetoresistiven Längensensoren geringer sein, als die Länge, in der die Magnetisierung um 180° gedreht ist. Im Falle des Einsatzes von GMR-Sensoren ist bis zu einem Abstand, der einer Verdrehung der Magnetisierung von 360° entspricht, ein Absolutmeßsystem realisierbar.

Für eine gleichmäßige Meßauflösung über die gesamte Meßlänge ist es von Vorteil, die Verdrehung der Magnetisierungsrichtung näherungsweise linear mit Fortschreiten in Meßrichtung anwachsen zu lassen. Gibt es Abschnitte innerhalb der gesamten Meßlänge, in denen eine erhöhte Auflösung vorhanden sein muß, kann in diesen Abschnitten ein höherer Wert für die Verdrehung pro Längeneinheit bei der Magnetisierung des Maßstabes eingestellt werden. Die dabei erzeugte Nichtlinearität der Anzeige kann in der Auswerteschaltung korrigiert werden.

Die Erfindung wird nachstehend an Ausführungsbeispielen näher erläutert. In den zugehörigen Zeichnungen sind dargestellt: In Fig.1 ein schematischer Überblick über ein erfindungsgemäßes Längenmeßsystem, in Fig. 2 ein Meßsystem mit Datenbus für die Längensensoren, in Fig. 3 ein Ausschnitt aus einem Maßstab mit zwei Spuren und einem Längensensor, in Fig. 4 ein Ausschnitt aus einem Maßstab mit drei Spuren und einem Längensensor, in Fig. 5 ein Überblick über ein Längenmeßsystem mit magnetischem Maßstab verdrehter Magnetisierung und in Fig. 6 ein magnetischer Maßstab mit Bereichen für unterschiedliche Auflösung.

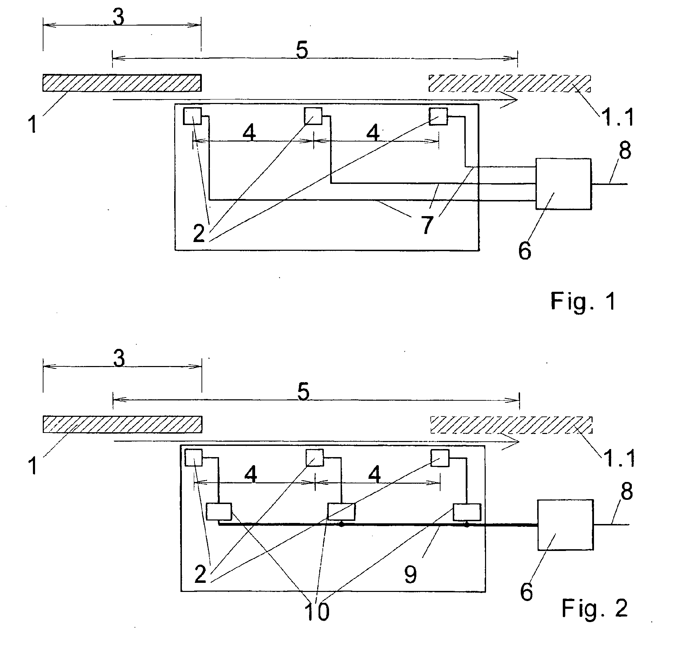

Fig. 1 zeigt einen Maßstab 1 mit einer Maßstabslänge 3 der maximal um die Meßlänge 5 verschoben werden kann und dann die mit 1.1 bezeichnete Position erreicht. Dem Maßstab 1 gegenüber sind drei Längensensoren 2 jeweils im Abstand 4 zueinander angeordnet. Diese Längensensoren 2 sind über Leitungen 7 mit einer Auswerteeinheit 6 verbunden, an deren Ausgang eine Längenangabe 8 als Signalwert ansteht. Die Länge 3 des Maßstabes 1 ist wesentlich geringer als die Meßlänge 5. Der Abstand 4 der Längensensoren 2 ist geringer als die Maßstabslänge 3. Letzteres sichert, daß in allen Positionen des Maßstabes 1 mindestens immer ein Längensensor 2 dem Maßstab 1 direkt gegenüber steht und so einen Meßwert liefern kann, der durch eine geeignete, dem Maßstab 1 bei seiner Herstellung eingeprägte und über die Maßstabslänge 3 variierende physikalische Größe, auf die der Längensensor reagiert, hervorgerufen wird. Die Zahl drei der Längensensoren 2 in Fig. 1 ist als Beispiel zu betrachten. In erfindungsgemäßen Meßsystemen sind mindestens zwei Längensensoren enthalten. Ihre Anzahl ist jedoch beliebig und kann insbesondere auch sehr groß sein. Die Mindestanzahl der Längensensoren 2 ergibt sich aus dem Verhältnis der Meßlänge 5 zur Maßstabslänge 3.

Fig. 2 zeigt ein ähnlich aufgebautes Längenmeßsystem, bei dem die Verbindung zwischen den Längensensoren 2 und der Auswerteschaltung 6 jedoch von einem Datenbus 9 hergestellt wird. Die Auswahl eines bestimmten Sensors 2, der dem Maßstab 1 in der jeweiligen Position gerade gegenüber steht, übernehmen elektronische Schaltungen 10. Im in Fig. 2 dargestellten Fall liefert nur der links befindliche Längensensor 2 einen Meßwert, da nur er dem Maßstab 1 gegenübersteht. Die von der Auswerteschaltung 6 ermittelte und am Ausgang anstehende Längenangabe 8 setzt sich aus zwei Anteilen zusammen. Ein erster Anteil ergibt sich aus der Nummer des gerade ausgewählten Längensensors 2. Mit steigender Nummer befindet sich der ausgewählte Längensensor um eine zunehmende Strecke vom Anfang der Meßlänge 5 entfernt. Ein zweiter Anteil der Längenangabe 8 ergibt sich aus dem Meßwert des jeweils ausgewählten Längensensors 2. Er berücksichtigt, wieweit der Maßstab 1 bereits gegenüber dem jeweiligen Längensensor 2 verschoben ist. Ist eine große Anzahl von Längensensoren 2 vorhanden, ergibt sich ein grober Positionswert bereits aus der Nummer des ausgewählten, dem Maßstab 1 gegenüberstehenden Längensensors 2. Die genaue Längenangabe 8 hoher Längenauflösung ergibt sich, wie gesagt, aus der zusätzlichen Berücksichtigung des Meßwertes des ausgewählten Längensensors 2.

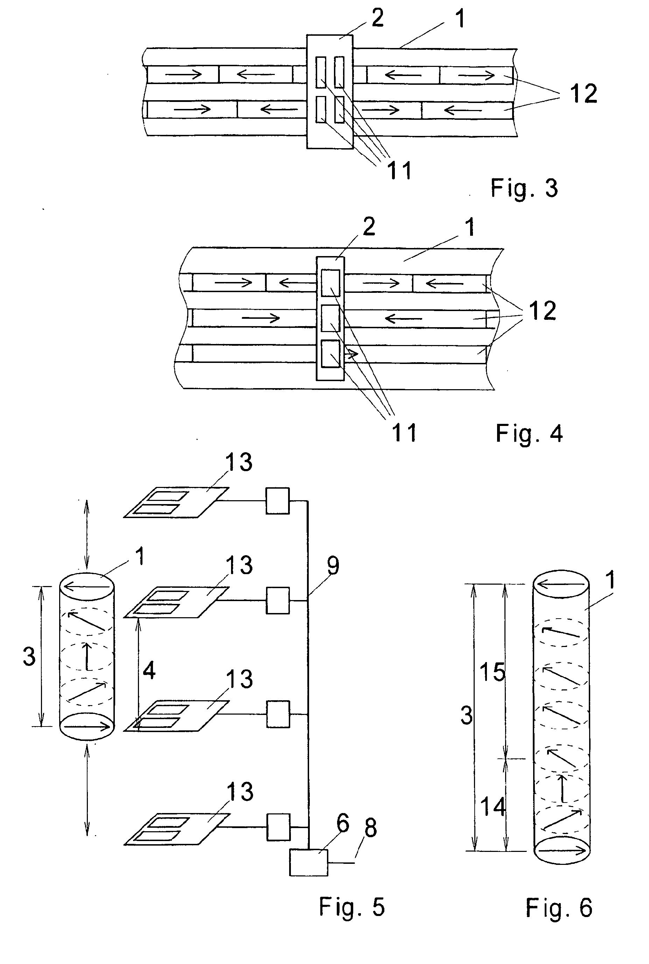

Einen Ausschnitt aus einem speziellen Maßstab 1 zeigt Fig. 3. Hier besteht der Maßstab 1 aus magnetisierbarem Material. Mit Hilfe einer Schreibvorrichtung wurden auf dem Maßstab 1 zwei Spuren 12 hergestellt. In beiden Spuren 12 sind jeweils untereinander gleich lange Bereiche entgegengesetzt gerichteter Magnetisierung vorhanden, die in der Fig. 3 durch entsprechende Pfeile gekennzeichnet sind. Die obere Spur 12 enthält im dargestellten Ausschnitt vier Bereiche, die untere Spur 12 fünf. Über den Spuren entsteht durch die dauermagnetische Wirkung der magnetisierten Bereiche in Meßrichtungrichtung des Längenmeßsystems jeweils eine mit der Koordinate in dieser Richtung sinusförmig variierende magnetische Feldstärke. Der dargestellte Längensensor 2 enthält pro Spur zwei magnetoresistive Senorelemente 11, die es gestatten, die Phase der Sinusfunktionen der beiden Spuren 12 in den unterschiedlichen Positionen des Maßstabes 1 gegenüber dem Längensensor 2 in der Auswerteschaltung zu bestimmen. Die Differenz der Phasen beider Spuren ist wegen der um eins unterschiedlichen Anzahl der magnetischen Bereiche der Position des Maßstabes 1 gegenüber dem Längensensor 2 eindeutig zuzuordnen. Das hier kurz beschriebene Verfahren ist bekannt und nicht Gegenstand der Erfindung. Hier soll nur demonstriert werden, daß es auch für erfindungsgemäße Meßanordnungen Anwendungen finden kann.

Ein anderer Aufbau des Maßstabes 1 wird in Fig. 4 gezeigt. Wieder handelt es sich der einfachen Darstellung wegen um einen magnetischen Maßstab 1. In drei Spuren 12 wurden die drei dargestellten Magnetisierungsmuster erzeugt. Man erkennt, daß im dargestellten Ausschnitt durch die Magnetisierungsrichtungen eine binär codierte Darstellung der Postion gegeben ist. Der Längensensor 2 enthält drei Sensorelemente 11, mit denen die Magnetisierungsrichtungen erkannt werden können. Damit ist die eindeutige Zuordnung der Position des Maßstabes 1 gegenüber dem Längensensor 2 möglich. Auch dieses Verfahren ist bekannt, kann aber im Rahmen der Erfindung vorteilhaft genutzt werden.

Für die Nutzung eines weiteren bekannten Längenmeßverfahrens ist ein drittes Beispiel in Fig. 5 dargestellt. Hier besteht der Maßstab 1 aus einem magnetischen Stab der Länge 3. Der Stab ist einer Richtung des Querschnittes, dessen Normale die Meßrichtung ist, magnetisiert. Die Richtung der Magnetisierung ist mit Fortschreiten in Meßrichtung zunehmend gegen die Richtung am unteren Ende des Maßstabes 1 verdreht, wie durch die Pfeile in den eingezeichneten Querschnitten dargestellt. Die Richtung des sich am Maßstab ergebenden Magnetfeldes wird mit Winkelsensoren 13 auf der Basis des anisotropen magnetoresistiven Effektes ermittelt. Dazu enthält jeder Winkelsensor 13 zwei Sensorelemente, die dem Sinus bzw. dem Kosinus des doppelten Winkels der Magnetiserungsverdrehung gegenüber dem Maßstabsanfgang proportionale Signale abgeben. Da die Magnetisierung sich über der Maßstabslänge 3 nur um 180° dreht, ist eine eindeutige Zuordnung des gemessenen Winkels zur Position des Maßstabes 1 gegenüber dem Winkelsensor 13 möglich. Fig. 5 zeigt vier im Abstand 4 befindliche Winkelsensoren 13. Die gesamte Meßlänge wird damit um einen Faktor fünf größer als die Maßstabslänge 3, wenn diese mit dem Sensorabstand 4 übereinstimmt. Die Signale der Winkelsensoren 13 werden über einem Datenbus der Auswerteeinheit 6 zugeführt, an deren Ausgang die Längenangabe 8 ansteht.

Aus Fig 5 ist ersichtlich, daß für den Fall, daß die Länge 3 des Maßstabes 1 gleich oder größer ist als der Abstand 4 der Winkelsensoren 13, dem Maßstab 1 in bestimmten Positionen gleichzeitig zwei Winkelsensoren 13 gegenüberstehen. Da der Winkel des Magnetfeldes eindeutig einer bestimmten Position am Maßstab 1 entspricht, läßt sich hier mit dem Meßsystem selbst der Abstand 4 der hier als Winkelsensoren 13 ausgebildeten Längensensoren bestimmen. Diese Abstandsbestimmung ist mit dem erfindungsgemäßen Meßsystem auch bei Verwendung anderer physikalischer Effekte für Maßstab 1 und Längensensor 2 möglich.

Fig. 6 zeigt einen Maßstab 1 ähnlichen Aufbaus wie Fig. 5. Die gesamt Maßstabslänge 3 ist hier in zwei Abschnitte 13 und 14 aufgeteilt. Abschnitt 14 ist wesentlich kürzer als Abschnitt 15, aber in beiden Abschnitten erfolgt eine Verdrehung des Winkels der Magnetisierung um jeweils 90°. Die größere Verdrehung pro Längeneinheit im Abschnitt 14 ermöglicht es, hier mit höherer Längenauflösung auch geringere Längenänderungen bei der Positionsbestimmung zu ermitteln. So eine Anordnung ist vorteilhaft einsetzbar, falls nur in bestimmten Abschnitten hohe Auflösungen erforderlich sind. Im Längenmeßsystem werden solche Abschnitte dann wiederholt mit der Häufigkeit auftreten, die der Anzahl der verwendeten Längensensoren entspricht.

### Liste der Bezugszeichen

- 1: Maßstab
- 1.1: Maßstab in Endposition
- 2: Längensensor
- 3: Länge des Maßstabes
- 4: Abstand der Längensensoren
- 5: Meßlänge
- 6: Auswerteschaltung
- 7: Leitungen
- 8: Längenangabe
- 9: Datenbus
- 10: elektronische Schaltung
- 11: Sensorelement
- 12: Spur
- 13: magnetischer Weinkelgeber
- 14: Abschnitt des Maßstabes
- 15: Abschnitt des Maßstabes

## Patentansprüche

1. Absolutlängenmesssystem, bei dem ein Maßstab (1) relativ zur Position mindestens eines magnetischen Längensensors (2) bewegt wird, wobei der Maßstab an jedem Ort über seine Länge betrachtet einen eindeutigen, den Ort charakterisierenden Magnetisierungszustand aufweist und ein genauer Messwert für die Position aus einem Signalwert des magnetischen Längensensors (2) gebildet wird, der durch den Magnetisierungszustand des Maßstabes (1) am Ort des gegenüberstehenden magnetischen Längensensors (2) erzeugt wird,
**dadurch gekennzeichnet,**
**dass** der Maßstab (1) kürzer ist als die Messlänge (5), um die der Maßstab (1) maximal verschoben werden kann,
**dass** zwei oder mehr magnetische Längensensoren (2) entlang der Messrichtung vorhanden sind,
**dass** die Abstände (4) der magnetischen Längensensoren (2) zueinander kleiner als die Länge (3) des Maßstabes (1) sind,
**dass** eine Auswerteschaltung (6) vorgesehen ist, mit der wenigstens einer der magnetischen Längensensoren (2) ausgewählt wird, der bei dieser Position dem Maßstab gegenübersteht, und
**dass** die Auswerteschaltung (6) derart ausgebildet ist, dass mit der Auswahl eine grobe Angabe der Position erfolgt und dass der genaue Messwert für die jeweilige Position aus dieser groben Position und dem jeweiligen Signalwert des ausgewählten magnetischen Längensensors (2) gebildet wird, der durch den Magnetisierungszustand des Maßstabes (1) am Ort des ausgewählten magnetischen Längensensors (2) erzeugt wird.

2. Längenmesssystem nach Anspruch 1,
**dadurch gekennzeichnet,**
**dass** die Auswerteschaltung (6) über Leitungen (7) mit allen Längensensoren (2) verbunden ist.

3. Längenmesssystem nach Anspruch 1,
**dadurch gekennzeichnet,**
**dass** die Auswerteschaltung (6) über einen Datenbus (9) mit allen Längensensoren (2) verbunden ist.

4. Längenmesssystem nach Anspruch 1,
**dadurch gekennzeichnet,**
**dass** der Maßstab (1) eine Spur (12) trägt und jeder Längensensor (2) nur ein Sensorelement (11) zum Abtasten dieser Spur (12) enthält.

5. Längenmesssystem nach Anspruch 4,
**dadurch gekennzeichnet,**
**dass** die Spur (12) eine in Maßstabslängsrichtung periodisch wiederkehrende durch die Sensorelemente (2) abtastbare physikalische Größe in ihrer Umgebung erzeugt und die Bestimmung der Position des Maßstabes (1) gegenüber dem jeweiligen Längensensor (2) inkremental erfolgt.

6. Längenmesssystem nach Anspruch 1,
**dadurch gekennzeichnet,**
**dass** der Maßstab (1) zwei oder mehr Spuren (12) trägt und jeder Längensensor (2) Sensorelemente (11) in einer der Spuranzahl entsprechenden Anzahl zum Abtasten der Spuren (12) enthält und so die absolute Position des jeweiligen Längensensors (2) bezüglich der Maßstabslänge (3) ermittelbar ist.

7. Längenmesssystem nach Anspruch 6,
**dadurch gekennzeichnet,**
**dass** die Spuren (12) in Maßstabslängsrichtung periodisch in unterschiedlichen Periodenlängen wiederkehrende durch die Sensorelemente (11) abtastbare physikalische Größe in ihrer Umgebung erzeugen.

8. Längenmesssystem nach Anspruch 6,
**dadurch gekennzeichnet,**
**dass** eine oder mehrere Spuren (12) einen Code tragen.

9. Längenmesssystem nach Anspruch 1,
**dadurch gekennzeichnet,**
**dass** die Abstände (4) und Positionen der Längensensoren (2) bekannt sind.

10. Längenmesssystem nach Anspruch 9,
**dadurch gekennzeichnet,**
**dass** die Abstände (4) der Längensensoren (2) untereinander gleich sind.

11. Längenmesssystem nach Anspruch 1,
**dadurch gekennzeichnet,**
**dass** die Abstände (4) und Positionen von jeweils zwei benachbarten Längensensoren (2) aus den Messwerten der jeweiligen beiden Längensensoren (2) ermittelbar sind.

12. Längenmesssystem nach Anspruch 11,
**dadurch gekennzeichnet,**
**dass** die Positionen der Längensensoren (2) durch bestimmte Besonderheiten entlang des Messweges vorgegeben sind.

13. Längenmesssystem nach Anspruch 12,
**dadurch gekennzeichnet,**
**dass** die Position des Maßstabes (1) in der Umgebung der Besonderheiten mit größerer Genauigkeit bestimmbar ist als die Gesamtlänge des zurückgelegten Weges des Maßstabes (1).

14. Längenmesssystem nach Anspruch 1,
**dadurch gekennzeichnet,**
**dass** die Längensensoren (2) den anisotropen magnetoresistiven Effekt nutzen.

15. Längenmesssystem nach Anspruch 1,
**dadurch gekennzeichnet,**
**dass** die Längensensoren (2) den GMR-Effekt nutzen.

16. Längenmesssystem nach Anspruch 1,
**dadurch gekennzeichnet,**
**dass** als Maßstab (1) ein Stab benutzt wird, dessen Magnetisierung senkrecht zur Längsachse des Stabes gerichtet ist, wobei die Richtung der Magnetisierung gegenüber der Richtung am Stabanfang mit Fortschreiten in Messrichtung zunehmend verdreht ist, und dass die Längensensoren (2) magnetische Winkelsensoren (13) sind, mit deren Hilfe die Richtung des in Maßstabsnähe auftretenden Magnetfeldes bestimmbar ist.

17. Längenmesssystem nach Anspruch 16,
**dadurch gekennzeichnet,**
**dass** die magnetischen Winkelsensoren (13) den anisotropen magnetoresistiven Effekt nutzen und dass der Abstand (4) der magnetischen Winkelsensoren (13) geringer ist als die Länge, über die eine Verdrehung der Magnetisierungsrichtung um 180° erfolgt.

18. Längenmesssystem nach Anspruch 16,
**dadurch gekennzeichnet,**
**dass** die magnetischen Winkelsensoren (13) den GMR-Effekt nutzen und dass der Abstand (4) der magnetischen Winkelsensoren (13) geringer ist als die Länge, über die eine Verdrehung der Magnetisierungsrichtung um 360° erfolgt.

19. Längenmesssystem nach Anspruch 16,
**dadurch gekennzeichnet,**
**dass** die Verdrehung der Magnetisierungsrichtung linear mit dem Fortschreiten in Messrichtung erfolgt.

20. Längenmesssystem nach Anspruch 16,
**dadurch gekennzeichnet,**
**dass** die Verdrehung der Magnetisierungsrichtung mit dem Fortschreiten in Messrichtung in ausgewählten Bereichen des Maßstabes pro Längeneinheit einen größeren Wert hat, so dass sich hier eine größere Längenauflösung ergibt.

## Claims

1. Absolute length measuring system with a measuring rod (1) moving with respect to at least one magnetic length sensor (2), the measuring rod having a distinct, position-characterising magnetic state when regarded at any position along its length, and an exact measured value for the position being generated from a signal value of the magnetic length sensor (2) which is produced by means of the magnetic state of the measuring rod (1) at the position of the facing magnetic length sensor (2),
**characterised in that**
- the measuring rod (1) is shorter than the measurement length (5) by which the measuring rod (1) can be moved at most,
- two or more magnetic length sensors (2) are provided along the measuring device,
- the spacings (4) of the magnetic length sensors (2) from one another are smaller than the length (3) of the measuring rod (1),
- an evaluation circuit (6) is provided, with which at least one of the magnetic length sensors (2) which faces the measuring rod in this position is selected, and
- the evaluation circuit (6) is configured in such a way that, with the selection, a rough indication of the position is given and the exact measured value for the respective position is generated from this rough position and the respective signal value of the selected magnetic length sensor (2), which value is produced by means of the magnetic state of the measuring rod (1) at the position of the selected magnetic length sensor (2).

2. Length measuring system according to claim 1,
**characterised in that** the evaluation circuit (6) is connected by lines (7) to all length sensors (2).

3. Length measuring system according to claim 1,
**characterised in that** the evaluation circuit (6) is connected via a data bus (9) to all length sensors (2).

4. Length measuring system according to claim 1,
**characterised in that** the measuring rod (1) has a track (12) and each length sensor (2) incorporates only one sensor element (11) for scanning this track (12).

5. Length measuring system according to claim 4,
**characterised in that** the track (12) produces in its vicinity a physical value which is periodically recurring in the longitudinal direction of the measuring rod and can be scanned by the sensor elements (2), and the determining of the position of the measuring rod (1) with respect to the respective length sensor (2) is carried out incrementally.

6. Length measuring system according to claim 1,
**characterised in that** the measuring rod (1) has two or more tracks (12) and each length sensor (2) incorporates sensor elements (11) in a number which corresponds to the number of tracks, for scanning the tracks (12), and thus the absolute position of the respective length sensor (2) with respect to the measuring rod length (3) can be determined.

7. Length measuring system according to claim 6,
**characterised in that** the tracks (12) produce in their vicinity a physical value which is periodically recurring in the longitudinal direction of the measuring rod, at different period lengths, and can be scanned by the sensor elements (11).

8. Length measuring system according to claim 6,
**characterised in that** one or more tracks (12) have a code.

9. Length measuring system according to claim 1,
**characterised in that** the spacings (4) and positions of the length sensors (2) are known.

10. Length measuring system according to claim 9,
**characterised in that** the spacings (4) of the length sensors (2) are equal to each other.

11. Length measuring system according to claim 1,
**characterised in that** the spacings (4) and positions of each two adjacent length sensors (2) can be determined from the measured values of each of the two length sensors (2).

12. Length measuring system according to claim 11,
**characterised in that** the positions of the length sensors (2) are predetermined by means of specific features along the measured displacement.

13. Length measuring system according to claim 12,
**characterised in that** the position of the measuring rod (1) in the vicinity of the features can be determined with greater accuracy than the total length of the covered displacement of the measuring rod (1).

14. Length measuring system according to claim 1,
**characterised in that** the length sensors (2) use the anisotropic magnetoresistance effect.

15. Length measuring system according to claim 1,
**characterised in that** the length sensors (2) use the GMR effect.

16. Length measuring system according to claim 1,
**characterised in that**, as a measuring rod (1), a rod is used, the magnetisation of which is aligned perpendicular to the longitudinal axis of the rod, the magnetisation direction being increasingly rotated, as measurement progresses in the measuring direction, with respect to the direction at the start end of the rod, and **in that** the length sensors (2) are magnetic angle sensors (13), with the aid of which the direction of the magnetic field occurring in the vicinity of the measuring rod can be determined.

17. Length measuring system according to claim 16,
**characterised in that** the magnetic angle sensors (13) use the anisotropic magnetoresistance effect, and **in that** the spacing (4) of the magnetic angle sensors (13) is smaller than the length across which a 180° rotation in the magnetisation direction takes place.

18. Length measuring system according to claim 16,
**characterised in that** the magnetic angle sensors (13) use the GMR effect, and **in that** the spacing (4) of the magnetic angle sensors (13) is smaller than the length across which a 360° rotation in the magnetisation direction takes place.

19. Length measuring system according to claim 16,
**characterised in that** the rotation of the magnetisation direction takes place linearly, as measurement progresses in the measuring direction.

20. Length measuring system according to claim 16,
**characterised in that** the rotation of the magnetisation direction, as measurement progresses in the measuring direction, has a larger value per unit of length in selected regions of the measuring rod, so that a higher length resolution results here.

## Revendications

1. Système pour mesurer une longueur absolue, dans lequel une barre de mesure (1) est déplacée par rapport à la position d'au moins un capteur de longueur (2) magnétique, où la barre de mesure présente clairement un état de magnétisation caractérisant le lieu en chaque lieu sur sa longueur et une valeur de mesure précise pour la position est instaurée à partir de la valeur d'un signal du capteur de longueur (2) magnétique, qui est généré par l'état de magnétisation de la barre de mesure (1) au niveau du lieu du capteur de longueur (2) magnétique situé en face,
**caractérisé en ce**
**que** la barre de mesure (1) est plus courte que la longueur de mesure (5) de laquelle la barre de mesure (1) peut être déplacée au maximum,
**que** deux ou davantage de capteurs de longueur (2) magnétiques sont présents le long de la direction de mesure,
**que** les distances (4) des capteurs de longueur (2) magnétiques entre eux sont inférieures à la longueur de la barre de mesure (1),
**qu'**un circuit d'évaluation (6) est prévu à l'aide duquel au moins l'un des capteurs de longueur (2) magnétiques est choisi, celui qui est situé en face de la barre de mesure dans cette position, et
**que** le circuit d'évaluation (6) est conçu de telle manière qu'avec le choix une indication grossière de la position a lieu et que la valeur de mesure précise pour la position respective est établie à partir de cette position grossière et de la valeur du signal correspondante du capteur de longueur (2) magnétique choisi, qui est générée par l'état de magnétisation de la barre de mesure (1) au lieu du capteur de longueur (2) magnétique choisi.

2. Système de mesure de longueurs selon la revendication 1,
**caractérisé en ce**
**que** le circuit d'évaluation (6) est relié par des lignes (7) avec tous les capteurs de longueur (2).

3. Système de mesure de longueur selon la revendication 1,
**caractérisé en ce**
**que** le circuit d'évaluation (6) est relié avec tous les capteurs de longueur (2) par un bus de données (9).

4. Système de mesure de longueur selon la revendication 1
**caractérisé en ce**
**que** la barre de mesure (1) porte une piste (12) et que chaque capteur de longueur (2) ne contient qu'un élément capteur (11) pour le balayage de la piste (12).

5. Système de mesure de longueur selon la revendication 4,
**caractérisé en ce**
**que** la piste (12) génère une grandeur physique repérable par les éléments capteurs (2) et se renouvelant périodiquement dans la direction longitudinale de la barre de mesure dans son environnement et que la détermination de la position de la barre de mesure (1) est effectuée par incréments par rapport au capteur de longueur (2) respectif.

6. Système de mesure de longueur selon la revendication 1,
**caractérisé en ce**
**que** la barre de mesure (1) porte deux ou davantage de pistes (12) et chaque capteur de longueur (2) contient des éléments capteurs (11) en un nombre correspondant au nombre de pistes pour le balayage des pistes (12) et ainsi, la position absolue du capteur de longueur (2) correspondant peut être déterminée par rapport à la longueur de la barre de mesure (3).

7. Système de mesure de longueur selon la revendication 6
**caractérisé en ce**
**que** les pistes (12) génèrent dans la direction longitudinale de la barre de mesure des grandeurs physiques repérables par les éléments capteurs (11), les grandeurs physiques se renouvelant avec des périodes de longueurs variables dans leur environnement.

8. Système de mesure de longueur selon la revendication 6,
**caractérisé en ce**
**qu'**une ou plusieurs pistes (12) portent un code.

9. Système de mesure de longueur selon la revendication 1
**caractérisé en ce**
**que** les distances (4) et les positions des capteurs de longueur (2) sont connues.

10. Système de mesure de longueur selon la revendication 9, **caractérisé en ce**
**que** les distances (4) des capteurs de longueur (2) sont identiques entre elles.

11. Système de mesure de longueur selon la revendication 1,
**caractérisé en ce**
**que** les distances (4) et les positions de deux capteurs de longueur (2) respectivement voisins peuvent être déterminées à partir des valeurs de mesure des deux capteurs de longueur (2) respectifs.

12. Système de mesure de longueur selon la revendication 11,
**caractérisé en ce**
**que** les positions des capteurs de longueur (2) sont prédéfinies par des particularités définies le long du trajet de mesure.

13. Système de mesure de longueur selon la revendication 12,
**caractérisé en ce**
**que** la position de la barre de mesure (1) peut être déterminée avec une précision plus grande dans l'environnement des particularités que la longueur totale du trajet accompli par la barre de mesure (1).

14. Système de mesure de longueur selon la revendication 1,
**caractérisé en ce**
**que** les capteurs de longueur (2) utilisent l'effet magnéto-résistif anisotrope.

15. Système de mesure de longueur selon la revendication 1
**caractérisé en ce**
**que** les capteurs de longueur (2) utilisent l'effet de la magnétorésistance géante (GMR).

16. Système de mesure de longueur selon la revendication 1,
**caractérisé en ce**
**qu'**en tant que barre de mesure (1), une barre est utilisée dont la magnétisation est orientée verticalement par rapport à l'axe longitudinal de la barre, où par rapport à l'orientation au début de la barre l'orientation de la magnétisation est progressivement déviée d'un angle avec la progression dans la direction de mesure, et que les capteurs de longueur (2) sont des capteurs d'angles (13) magnétiques, avec l'aide desquels l'orientation du champ magnétique se produisant au voisinage de la barre de mesure peut être déterminée.

17. Système de mesure de longueur selon la revendication 16,
**caractérisé en ce**
**que** les capteurs angulaires (13) magnétiques utilisent l'effet magnéto-résistif anisotrope et que la distance (4) des capteurs d'angles (13) magnétiques est inférieure à la longueur sur laquelle s'effectue une déviation angulaire de l'orientation de la magnétisation de 180°.

18. Système de mesure de longueur selon la revendication 16,
**caractérisé en ce**
**que** les capteurs d'angles (13) magnétiques utilisent l'effet GMR et que la distance (4) des capteurs d'angles (13) magnétiques est inférieure à la longueur sur laquelle s'effectue une déviation angulaire de l'orientation de la magnétisation de 360°.

19. Système de mesure de longueur selon la revendication 16,
**caractérisé en ce**
**que** la déviation angulaire de l'orientation de la magnétisation s'effectue linéairement avec la progression dans la direction de mesure.

20. Système de mesure de longueur selon la revendication 16,
**caractérisé en ce**
**que** la déviation angulaire de l'orientation de la magnétisation a une valeur plus grande par unité de longueur dans des domaines choisis de la barre de mesure avec la progression dans la direction de mesure, de sorte qu'une résolution de longueur plus élevée est obtenue dans ce cas.
